# EUROPEAN PATENT APPLICATION

(11) **EP 3 267 651 A1**
(43) Date of publication of application: **10.01.2018**
(21) Application number: 16305852.2
(22) Date of filing: 06.07.2016
(51) Int. Cl.: H04L 29/06, H04W 12/02, G06F 21/60

(54) **METHOD, DEVICE AND SYSTEM FOR STORING SECURELY DATA**

(71) Applicant: GEMALTO SA, 92190 Meudon (FR)
(72) Inventor: DAO, Frédéric, 13881 GEMENOS cedex (FR); CLEMENT, Frédéric, 13881 GEMENOS cedex (FR); HALLE, David, 13881 GEMENOS cedex (FR); DUPREZ, Jérôme, 13881 GEMENOS cedex (FR); HUGUENIN, David, 13881 GEMENOS cedex (FR); SCHMITT, Sébastien, 13881 GEMENOS cedex (FR); NERSESSIAN, Christine, 13881 GEMENOS cedex (FR); ALLOUCHE, Philippe, 13881 GEMENOS cedex (FR); DANDELOT, Thomas, 13881 GEMENOS cedex (FR)

(57) **Abstract**

The invention relates to a method 20 for storing securely data.

According to the invention, a first device 12 accesses a data storage plan. The data storage plan comprises at least first data to be stored firstly in a first server 182 during a first time period and then at least a second server 184, 186 or 188 during a second time period. The first device accesses the at least first data. The method comprises the following steps. The first device or a second device 14, the second device incorporating or being coupled to the first device, sends the first data 212 to the first server before a start of the first time period. The first server, the first device or the second device sends, under control of the first or the second device, to the second server the first data 214 before a start of the second time period.

The invention also relates to corresponding first device and system.

## Description

### Field of the invention:

The invention relates generally to a method for storing securely data. Furthermore, the invention also pertains to a device for storing securely data. Finally, the invention relates to a system for storing securely data as well.

The present invention is notably applicable to a mobile (radio-communication) field wherein a chip, as a Secure Element (or SE), may be either embedded, such as an embedded Universal Integrated Circuit Card (or eUICC) within a device, or removable, such as a chip included within a smart card termed Subscriber Identity Module (or SIM) type card or the like, from a chip host device.

Within the present description, an SE is a smart object that includes a chip that protects, as a tamper resistant component, access to stored data and is intended to communicate data with an SE host device, like e.g. a mobile (tele)phone, a Machine to Machine (or M2M) or an Internet of Things (or loT) device.

### State of the art:

As known per se, a (mobile) phone stores data. The phone lets store the stored data in a remote server. Once the user needs to retrieve her/his data, the user uses the phone or another device to get back the remotely stored data.

However, the concerned data may include sensitive data.

Thus, there is a need to provide a solution that allows storing, in a secure manner, data at a server side.

### Summary of the invention:

The invention proposes a solution for satisfying the just herein above specified need by providing a method for storing securely data.

According to the invention, a first device accesses a data storage plan. The data storage plan comprises at least first data to be stored firstly in a first server during a first time period and then at least a second server during a second time period. The first device accesses the at least first data. The method comprises the following steps. The first device or a second device, the second device incorporating or being coupled to the first device, sends the first data to the first server before a start of the first time period. The first server, the first device or the second device sends, under control of the first or the second device, to the second server the first data before a start of the second time period.

The principle of the invention consists in that a first or a cooperating second device stores a predetermined data storage plan that allows splitting data to be stored in different servers associated with different time periods that are defined according to the data storage plan.

It is to be noted that the data to be stored at a server side may be initially stored within the first device or the second device incorporating or being coupled to the first device.

Thus, only the first or the second device that accesses the data storage plan knows at a given time in which server(s) the data is stored. No server accesses and knows the data storage plan. Only the first or the second device (or its user) has a full control of the data storage since the first or the second device accesses the data storage plan.

An attacker does not know when the concerned data is transmitted to a server and where the concerned data is stored and located at a given time.

The invention solution allows therefore storing securely the concerned data.

The invention method may be automatically implemented. Thus, a user of the first or the second device that implements the invention method is not involved to store data at a server side.

The invention method is therefore convenient for the user, when applicable. The user has neither to go to an office of a Mobile Network Operator (or MNO), a Mobile Network Virtual Operator (or MVNO) or a service provider, nor to call any technical support platform relating to a service provider.

According to a further aspect, the invention is a first device for storing securely data.

According to the invention, the first device comprises means for accessing a data storage plan. The data storage plan comprises at least first data to be stored firstly in a first server during a first time period and then at least a second server during a second time period. The first device comprises means for accessing the at least first data. The first device is configured to send the first data to the first server before a start of the first time period.

The first device may be a terminal or a chip.

The chip is preferably included within an SE.

The SE may be fixed to or removable from a host device.

The invention does not impose any constraint as to a kind of the SE type.

As a removable SE, it may be a SIM type card, a Machine Identification Module (or MIM), a Secure Removable Module (or SRM), a smart dongle of the USB (acronym for "Universal Serial Bus") type, a (micro-) Secure Digital (or SD) type card or a Multi-Media type Card (or MMC) or any format card (or another medium) to be coupled or connected to a chip host device.

As to the chip host device, it may be constituted by any electronic device, like e.g. a user terminal, a terminal or a M2M or an loT device, comprising data processing means, data storing means and one or several Input/Output (or I/O) interfaces.

According to still a further aspect, the invention is a system for storing securely data.

According to the invention, the system comprises at least a first device, a first server and a second server. The first device comprises means for accessing a data storage plan. The data storage plan comprises at least first data to be stored firstly in the first server during a first time period and then at least the second server during a second time period. The first device comprises means for accessing the at least first data. The first device is configured to send the first data to the first server before a start of the first time period. And the first server or the first device is configured to send, under control of the first device, to the second server the first data before a start of the second time period.

### Brief description of the drawings:

Additional features and advantages of the invention will be more clearly understandable after reading a detailed description of one preferred embodiment of the invention, given as one indicative and non-limitative example, in conjunction with the following drawings:

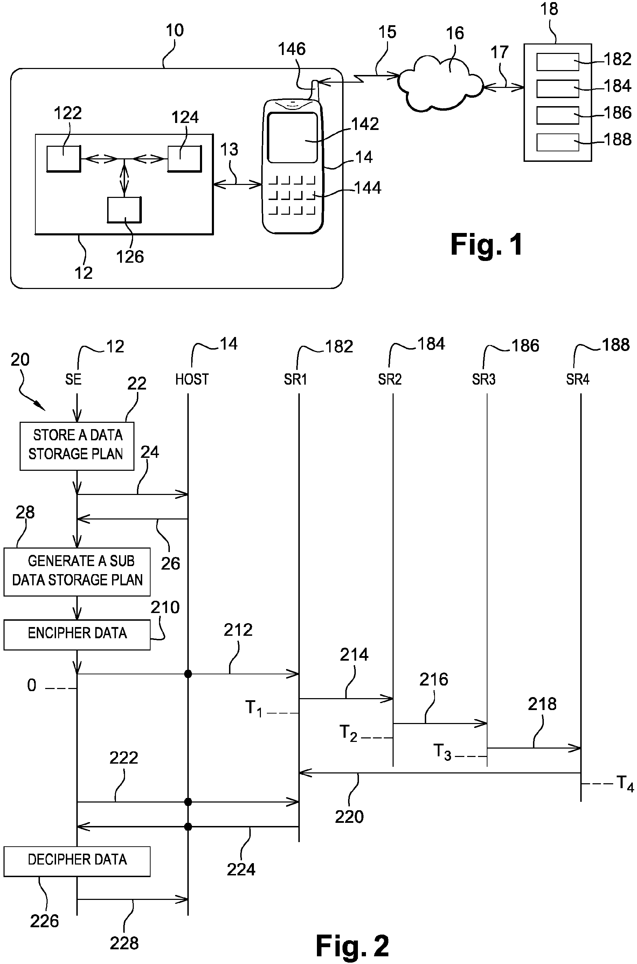

- Figure 1 is a simplified diagram of a terminal equipment, a (mobile) network and a computer network with a plurality of servers, the terminal equipment comprising a terminal and a chip being arranged to store a data storage plan and let store data, based on the data storage plan, in different servers over time, according to the invention; and
- Figure 2 illustrates an example of a flow of messages exchanged between notably the terminal, the chip and the servers of figure 1, so that the chip controls, according to a time schedule defined by the data storage plan, a data storage at a server side.

### Detailed description:

Herein under is considered an embodiment in which the invention method for storing securely data is implemented notably by a chip, like e.g. an eUICC, as a chip incorporated, possibly in a removable manner, within a Printed Circuit Board (or PCB) of a user terminal/terminal, as a chip host device.

The chip may also incorporate at least part of the terminal component(s), like e.g. a baseband processor, an application processor and/or other electronic component(s).

Alternately, instead of an eUICC, the chip may be a Trusted Execution Environment (or TEE), as a secure area of a terminal processor and a secured runtime environment.

The chip is preferably included within an SE.

The SE may nevertheless have different form factors.

Instead of being embedded within its host device, the chip may be carried by a medium, such as a smart card or a dongle, like e.g., a USB type dongle, and is communicatively coupled or connected to the host device.

Naturally, the herein below described embodiment is only for exemplifying purposes and is not considered to reduce the scope of the invention.

**Figure 1** shows schematically a Terminal Equipment (or TE) 10, a visited mobile (radio-communication) network 16 and a computer network 18.

The TE 10 includes a chip 12 and a mobile phone 14, as a (user) terminal and a chip host device.

For sake of simplicity, the chip 12, the mobile phone 14, the Visited mobile Network 16 and the Computer Network 18 are termed infra the SE 12, the host 14, the MN 16 and the CN 18 respectively.

The CN 18, like e.g. an Internet type network, or several networks (not represented) include(s) a first ServeR or SR1, a second ServeR or SR2, a third ServeR or SR3 and a fourth ServeR or SR4 that are involved for storing data securely. One or several involved servers may be supported by one and the same computer.

According to a particular embodiment, the TE 10 is under a radio coverage of the MN 16.

The user terminal, the terminal or a machine in an M2M as a terminal may be fixed (i.e. not mobile) or mobile.

The terminal may be a Personal Digital Assistant (or PDA), a vehicle, a Point Of Sale (or POS), an electricity meter, a water meter, a gas meter, any meter, a set-top box, a tablet computer, a Personal Computer (or PC), a desktop computer, a laptop computer, a video player, an audio player, a portable TeleVision (or TV), a media-player, a game console, a netbook, an electronic mobile equipment or an accessory (e.g.: glasses, a watch or a jewel) or an loT device.

Instead of a phone, the user terminal or the terminal may be any other computer device including means for processing data, comprising (or being connected to) wireless (or wire) communication means for exchanging data with outside, and comprising (or being connected to) means for storing data.

Within the present description, the adjective "wireless" used within the expression "wireless communication means" denotes notably that the communication means communicates via one or several Long Range (or LR) Radio-Frequency (or RF) links.

The LR RF may be fixed e.g., around 850, 900, 1800, 1900 and/or 2100 MHz.

The host I/O interfaces include one or several I/O interfaces for exchanging data with the SE 12.

The host I/O interface with the SE 12 may be e.g. an International Organization for Standardization (or ISO) 7816 and/or a USB type interface(s), as a contact interface(s), when the SE 12 is inserted, in a removable manner, within the host 14.

Alternately, instead of a contact interface(s), the host I/O interface with the SE 12 is connected to or includes a contact-less interface(s). The host 14 is connected to or includes means for communicating data while using preferably a Short Range (or SR) RF link(s). The SR RF link(s) may be related to any technology that allows the host 14 to exchange data, through a so-termed contact-less link(s) with the SE 12. The SR RF may be fixed at 13,56 MHz and related to a Near Field Communication (or NFC) and/or ISO 14443 type interface(s), as a contact-less technology.

The host 14 includes data processing means, such as a (micro)processor(s) (and/or a (micro)controller(s)), data storing means (not represented), as a phone memory, and one or several I/O interfaces that are linked all together through a control and data bus (not represented).

The host 14 is used for accessing via the MN 16 or, possibly through the MN 16, the CN 18, the servers involved for storing securely data.

The host memory may comprise one or several memories including one or several volatile memories and one or several non-volatile memories.

The host memory, be it volatile or non-volatile, stores, at least in a temporary manner, data.

The host memory stores e.g. an International Mobile Equipment Identity (or IMEI) and/or an email address, as an identifier(s) relating to the host 14.

The host memory stores an OS and one or several applications.

Optionally, the host 14 includes a display screen 142 and a keyboard 144, as a Man Machine Interface (or MMI).

The host memory may store one or several applications, as executable data and DATA1, that may have been configured by a host user and user data, like e.g. photos and videos, as non-executable data and DATA2. The DATA1 and DATA2 are considered as being data to be securely stored for the user and/or an administrator of the concerned data.

According to a particular embodiment (not described), the host 14 memory stores an application for storing securely data, like e.g. the DATA1 and/or the DATA2.

The host 14 is coupled or connected, through a bi-directional link 13, to the SE 12, as a chip embedded within (or coupled to) the host 14.

The SE 12 is under control of a host 14 (micro)processor(s) (and/or a host 14 (micro)controler(s)) (not represented), as data processing means.

The SE 12 belongs to a user, as a subscriber to a service(s).

The SE 12 includes a (micro)processor(s) (and/or a (micro)controler(s)) 122, as data processing means, a memory(ies) 124, as data storing means, and one or several I/O interfaces 126 that are internally all connected, through an internal bidirectional data bus, to each other.

The I/O interface(s) 126 allow(s) communicating data from the internal SE 12 components to the chip exterior and conversely.

According to a particular embodiment, the SE 12 is based on a time base reference that originates from the external of the SE 12, like e.g. the host 14 and/or a remote server that provides the SE 12 with one or several reference times.

Alternately, the SE 12 uses an internal time base reference that may be regularly synchronized with a time base reference that is used by the servers involved for storing predetermined data.

The memory 124 stores an Operating System (or OS).

The memory 124 stores, preferably in a secure manner, preferably a plurality of sets of data relating, each, to a subscription, as non-executable data, DATA 3 and data to be securely stored for a user and/or an administrator of the concerned data.

Each set of data relating to one subscription includes preferably:
- an International Mobile Subscriber Identity (or IMSI), as a subscriber and a (service) subscription identifier for accessing a mobile network;
- a key Ki, as a Network Authentication Key (or NAK), allowing to authenticate the concerned subscriber to the concerned mobile network;
- Milenage or the like, as a network authentication algorithm, allowing to authenticate the concerned subscriber to the concerned mobile network;
- a file system including one or several Elementary Files (or EF);
- one or several security keys, like e.g. a key(s) for enciphering/deciphering data and/or a key(s) for signing data a key(s), as secret data; and/or
- one or several credentials, like e.g. a user name and/or an IDentifier (or ID) of the subscriber, as data relating to the user.

The memory 124 stores preferably one or several SIM type applications. The SIM type application(s) allow(s) the host 14 to identify and authenticate to one or several mobile networks.

According to a preferred embodiment, the memory 124 stores an application, termed applet (when programmed in Java) infra, for storing securely predetermined data, like e.g. the DATA1, the DATA2 and/or the DATA3.

According to a preferred embodiment, the memory 124 stores an enciphering key K and a corresponding deciphering key. The deciphering key is only stored within the memory 124. The deciphering key may be either the enciphering key K or a private key associated with the enciphering key K, as the corresponding public key.

The applet is configured to encipher, prior to sending the concerned data, the concerned data by using the enciphering key and decipher enciphered data by using a deciphering key stored only in the memory 124. Thus, only the applet is able to decipher enciphered data.

The applet allows controlling over time a data storage based on a registered data storage plan. The applet allows getting data, possibly deciphering the data, possibly enciphering the data and sending, according to the data storage plan, directly or indirectly, i.e. through the host 14 and/or possibly one or several servers, to a server, the possibly enciphered data. The applet allows letting generate by e.g. a cooperating server (not represented) or generating one or several identifiers relating to the concerned data, so as to identify and thus retrieve at a given time the concerned data from the original device, like e.g. the SE 12, the host 14 or another server. The applet allows thus transferring or moving dynamically data that is stored in an entity that is accessible from the SE 12 or a server to the original device, like e.g. the SE 12 or the host 14, or another server.

According to an essential invention feature, the memory 124 stores a predetermined data storage plan.

The data storage plan is previously generated by the applet, the host 14 or a cooperating server. To generate the data storage plan, one or several user preferences, like e.g. data to be concerned by such a data storage plan, and/or one or several servers that are available for storing the data and that may be retrieved from a cooperating server may be taken into account.

The data storage plan comprises a time schedule for storing data in different servers over time. The whole data concerned by the remote storage may be separated for a given time period.

According to a particular embodiment, a part of executable data may be sent to a predetermined server while another part of executable data may be sent to another predetermined server for a given time period. Alternately or additionally, executable data may be sent to a predetermined server while non-executable data may be sent to another predetermined server for a given time period.

The data storage plan allows knowing, in plain text or in an enciphered manner, at a given time which data is stored at which server, and possibly whether the concerned data is or is not identified, i.e. anonymously or not respectively.

The data storage plan includes preferably one or several data identifiers relating to data to be stored securely in different servers.

The data identifier(s) allow(s) identifying the concerned data during one or several time periods. The or each data identifier may change from a time period to another time period. Additionally or alternately, the or each data identifier may change from a server to another server. The or each data identifier may depend on one or several associated time periods and/or data relating to the server(s) that is(are) involved for storing the concerned data during the associated time period(s). The data identifier(s) is(are) generated preferably by the applet or by a cooperating server, like e.g. the server that is involved for storing the concerned data during one or several associated time periods.

To generate a data identifier(s), a predetermined algorithm, like e.g. a Hash type algorithm or a cryptographic algorithm, and data relating to the concerned server and/or data relating to the associated time period(s), as input(s) to the predetermined algorithm, are used. The data concerned by the input(s) may have previously undergone one or several predetermined data processing, like e.g. an addition of data.

The data storage plan includes a server identifier relating to each server that is involved for storing securely the concerned data during one or several associated time periods. The or each server identifier allows identifying and/or addressing the concerned server.

The server identifier may include a Uniform Resource Identifier (or URI), a Uniform Resource Locator (or URL), an Internet Protocol (or IP) address and/or other data relating to the server. The data storage plan may be presented through a first table with a predefined Time period(s) with a predetermined start time Tn-1 and a predetermined end time Tn, in a first column, preferably a predetermined data IDentifier(s) (or ID) associated with the concerned data and possibly the concerned associated time period, in a second column, a predetermined IDentifier relating to a server, in a third column, in which the concerned data has to be stored during the associated time period, and preferably a predetermined Key(s) (or K) associated with the server that is involved for storing the concerned data during the associated time period(s), in a fourth column.

The first table is e.g. as follows for only a part of the concerned DATA, like e.g. DATA1:

| Time period(s) with a start time and an end time | DATA IDentifier(s) | Server IDentifier(s) | Server Key(s) |
|---|---|---|---|
| 0-T1 | ID1 | URL1 | K1 |
| T1-T2 | ID2 | URL2 | K2 |
| T2-T3 | ID3 | URL3 | K3 |
| T3-T4 | ID4 | URL4 | K4 |

The server key(s) may be a public key relating to the concerned server or a key that is shared between the concerned server and the applet.

For example, the data storage plan comprises, for the first data or DATA1 to be stored, firstly, during a first time period or from 0 (zero) to T1, in the SR1 identified by URL1 and then, during a second time period or from T1 to T2, in the SR2 identified by URL2. The DATA1 is planned to be stored, during a third time period or from T2 to T3, in the SR3 identified by URL3 and during a fourth time period or from T3 to T4, in the SR4 identified by URL4. Once the end time T4 of the last predetermined time period occurs, the associated SR4 may be followed by the SR1, as the associated subsequent server. The data storage plan may thus be cyclic with a time period corresponding to an end time of the last associated time period.

The applet or a cooperating server (not represented) may generate, based on the data storage plan, a sub-data storage plan. To generate the sub-data storage plan, the applet (or the cooperating server) extracts, from the data storage plan, only a time schedule that is associated with the first data and one or several associated servers that are involved to store the associated first data during one or several associated time periods. The sub-data storage plan includes one (or several) end time(s) of the time period(s) during which one or several associated servers are involved to store the first data and preferably an identifier relating to each associated subsequent server. Each identified subsequent server is involved further to the end time of a time period that precedes the time period associated with the identified subsequent server.

The sub-data storage plan may be presented through a second table with preferably a predetermined data IDentifier(s) (or ID) associated with the concerned data, in a first column, a predetermined IDentifier (or ID) relating to each associated subsequent server, in a second column, in which the identified associated data has to be stored during the associated subsequent time period, and a predetermined end time Tn up to which the concerned data is to be stored in the current involved server, in a third column.

The applet or a current involved server sends the sub-data storage plan, based on the associated subsequent server identifier, to an identified associated subsequent server that is involved to store the concerned data during an associated subsequent time period.

At each predetermined end time, the current involved server has to send or move the sub-data storage plan with the concerned data that is identified by the associated data ID to an associated identified subsequent server.

For each (time period) end time that is comprised within the sub-data storage plan, the applet uses preferably a server key associated with the current server that is involved for storing the first data or DATA1 1 before its sending to an associated subsequent server. Thus, the applet enciphers by using the key associated with the current involved server:
- an identifier relating to the server, based on the associated subsequent server ID (of the sub-data storage plan), that is the next server to be involved for storing DATA1;
- the end time, based on the associated end time (of the sub-data storage plan), at which the current involved server has to send, besides the concerned data, the sub-data storage plan; and preferably
- an identifier relating to the concerned data, based on the associated data ID (of the sub-data storage plan), that is used by the current involved server.

The second table is e.g. as follows for only the concerned DATA, like e.g. DATA1:

| DATA IDentifier(s) | IDentifier(s) relating to a subsequent server(s) | End time |
|---|---|---|
| ID1 | URL2 | T1 |
| ID2 | URL3 | T2 |
| ID3 | URL4 | T3 |
| ID4 | URL1 | T4 |

The applet enciphers preferably each row of the second table by using a key associated with the current server that is involved for storing the concerned data DATA1.

According to this example, the sub-data storage plan comprises preferably an identifier of the concerned data ID1, that is stored (during the first time period) up to the end time T1, in the SR1 and, before the end time T1, the SR1 has to send the concerned identified data to URL2, as an ID of the associated next server SR2. The applet enciphers preferably by using K1 associated with, as the current involved server, SR1:
- URL2, as the associated subsequent server ID;
- T1, as the associated end time; and preferably
- ID1, as the associated data ID.

According to this example, the sub-data storage plan comprises preferably an identifier of the concerned data ID2, that is stored (during the second time period) from T1 to T2, in the SR2 and, before the end time T2, the SR2 has to send the concerned identified data to URL3, as an ID of the associated next server SR3. The applet enciphers preferably by using K2 associated with, as the current involved server, SR2:
- URL3, as the associated subsequent server ID;
- T2, as the associated end time; and preferably
- ID2, as the associated data ID.

According to this example, the sub-data storage plan comprises preferably an identifier of the concerned data ID3, that is stored (during the third time period) from T2 to T3, in the SR3 and, before the end time T3, the SR3 has to send the concerned identified data to URL4, as an ID of the associated next server SR4. The applet enciphers preferably by using K3 associated with, as the current involved server, SR3:
- URL4, as the associated subsequent server ID;
- T3, as the associated end time; and preferably
- ID3, as the associated data ID.

According to this example, the sub-data storage plan comprises preferably an identifier of the concerned data ID4, that is stored (during the fourth time period) from T3 to T4, in the SR4 and, before the end time T4, the SR4 has to send the concerned identified data to URL1, as an ID of the associated next server SR1. The applet enciphers preferably by using K4 associated with, as the current involved server, SR4:
- URL1, as the associated subsequent server ID;
- T4, as the associated end time; and preferably
- ID4, as the associated data ID.

The memory 124 stores data relating to a URI(s), a URL(s), an Internet Protocol (or IP) address(es) and/or other data relating to each external entity to be addressed, like e.g. the SR1, the SR2, the SR3, the SR4, the SR5 and/or (an)other server(s) accessible from the SE 12.

Alternately or additionally, the memory 124 stores data relating to a server, like e.g. a Domain Name Server (or DNS), allowing the applet to retrieve data relating to each external entity to be addressed, like e.g. the SR1, and/or (an)other server(s) accessible from the SE 12.

The applet, when executed by the processor 122, accesses the data storage plan.

The processor 122 processes, controls and communicates internally data with all the other components incorporated within the SE 12 and, through the I/O interface(s) 126, with the chip exterior.

The processor 122 executes, in a preferred manner, one or several security functions, like e.g. a data enciphering/deciphering, a data signature, a signature verification and/or an interlocutor authentication.

The processor 122 is preferably able to initiate an action(s), in order to interact directly with the outside world, in an independent manner of the host 14. Such a capacity of interaction at the initiative of the SE 12 is also known as being a proactive capacity in which the SE 12 plays a role of a master while the SE host device plays a role of a slave. According to one preferred embodiment, the SE 12 is able to use SIM ToolKit (or STK) type commands or the like, as proactive commands.

The processor 122 executes or runs one or several applications including the applet.

The applet is arranged to access data to be stored securely.

The applet may be configured to get data stored within the SE 12 and/or data stored, like e.g. the DATA1 and/or the DATA2, in an external entity, like e.g. the host 14 and/or one or several remote servers.

The applet is configured to carry out a data processing. The data processing may include one or several following elements: a data collection, a data deciphering, a generation of a data storage plan, a generation of one or several ID identifying data to be stored externally, a generation of a sub-data storage plan, a generation of one or several keys for enciphering/deciphering the concerned data, a data ciphering, a sub-data storage plan ciphering by using, for each end time of an associated time period, e.g. the concerned data and a key associated with each server to be involved.

The applet is able to get the key associated with each server to be involved for storing the concerned data by getting e.g. a (public) certificate of the concerned server that includes the public key of the concerned server.

Once the data processing has been carried out, according to an essential invention feature, the applet is configured to send, transfer or export the DATA1, preferably in an enciphered manner, to the SR1 before a start of the first time period, as defined in the data storage plan.

The applet may be configured to collect or import the possibly enciphered DATA1 from the SR1 before a start of the second time period. Then, the applet is adapted to send, transfer or export to the SR2 the possibly enciphered DATA1 before the start of the second time period, as defined in the data storage plan.

Alternately, instead of sending the possibly enciphered DATA1 directly from the applet, the applet requests the SR1, to send to one or several subsequent servers, like e.g. the SR2, to be involved for storing the possibly enciphered DATA1. To do this, the applet sends to the SR1 preferably a previously generated sub-data storage plan.

Optionally, at any given time, the applet updates the current data storage plan and therefore the current sub-data storage plan by addressing, according to the current data storage plan, to the current involved server an updated sub-data storage plan that has been previously generated by the applet that substitutes to the current sub-data storage plan.

The SE 12 uses, according to a preferred embodiment, the host 14 as a modem for exchanging, over an antenna 146, with the server side. The antenna 146 allows communicating data, possibly Over-The-Air (or OTA), through an LR RF link 15, with the mobile network 16.

Alternately or additionally, the SE 12 uses the host 14 as a modem for exchanging, over another antenna (not represented), Over-The-Internet (or OTI), through an SR RF link or the like, with the server side.

Each server that is involved for storing data that originates from the client side, like e.g. the SE 12 or the host 14, or another server is hosted by a computer with a processor(s), as data processing means, and a memory(ies) (not represented), as data storing means.

Each server that is involved for storing data is configured to receive data and store or let store the received data.

Each server accesses a database or a file system stored in a memory(ies) that is(are) present within or connected to the server.

Each server is arranged to store or let store in the database or the file system the received data preferably in association with a corresponding data ID.

The database or the file system includes preferably a correspondence table that includes, for one data IDentifier (or ID), like e.g. a digital token, associated with the concerned stored data, to be used by the original device, like e.g. the SE 12 and/or the host 14, to retrieve the concerned data.

The data ID is preferably received, either from (or through) the original device, like e.g. the SE 12 and/or the host 14, or another server, along with the concerned data to be stored.

The data ID does not depend preferably on any information relating to the original device, like e.g. one or several identifiers relating to the SE 12 and/or the host 14, in which the concerned data was initially stored. Thus, a possible attacker is not able to identify the original device that has sent and stored the thus identified data.

The data ID is used to keep the corresponding stored data in an anonymous manner. Each server storing the concerned data for a predefined time period does not know whom, i.e. from which original device, the stored data belongs and originates.

Each server that is involved for storing data (or the SE 12 or the host 14) is configured to send, under control of the original device, like e.g. the SE 12 or the host 14, to the original device, a device cooperating with the original device or another server the data before a start of a next time period that is defined in the data storage plan.

Figure 2 depicts an exemplary embodiment of a message flow 20 that involves the SE 12, the host 14 and the servers that are involved, under an SE 12 control, according to the data storage plan of the described first table, so as to store or let store DATA1 at the server side.

The DATA1 is data that is initially stored within the host 14.

It is assumed that the SE 12 (or the host 14) has (or lets have by a cooperating server) generated an ID associated with data, so as to identify the concerned data for each time period at the end time of which a data transfer is planned to another server. The data ID is generated by using a predetermined algorithm, like e.g. a cryptographic hash type algorithm, with a sum of the concerned data and a key associated with each involved server, as input data, and the data ID, as output data. Thus, the DATA1 is identified differently by ID1, ID2, ID3 and ID4, when stored in SR1, SR2, SR3 and SR4 respectively, according to the data storage plan. An ID is separated from each other.

The SE 12 registers 22, preferably in a secure manner, the data storage plan that has been previously generated by the SE 12, the host 14 or a cooperating server.

An execution of the applet is triggered by the host user or automatically, e.g. once a predefined time occurs and that is detected by the SE 12 possibly upon an event detection.

Firstly, the SE 12, i.e. the processor 122 that executes the applet, sends to the host 14 a message 24 that includes a request for getting DATA1.

Alternately, the request for getting DATA1 may be further accompanied with a request for erasing the concerned DATA1. Thus, the host 14, and more exactly its processor (or controller), will erase the concerned DATA1 once the host 14 has sent to the SE 12 the DATA1.

Once the host 14 has received and interpreted the message, the host 14, and more exactly its processor (or controller), sends to the SE 12 one or several messages 26 that include, as a request response, the DATA1.

As soon as the SE 12 has received the requested DATA1, the SE 12, i.e. the processor 122 that executes the applet, enciphers (not represented) preferably DATA1 by using an enciphering key K stored within the SE memory 124.

In another scenario (not represented), instead of the SE 12, the host 14, and more exactly its processor (or controller), gets DATA1 and enciphers preferably DATA1 by using a key K stored only within the host memory.

According to a preferred embodiment, the SE 12 generates 28, based on the data storage plan, a sub-data storage plan. The sub-data storage plan is e.g. the described second table.

Optionally, the SE 12 enciphers 210 each end time of the time periods during which each respective associated server is involved for storing the DATA1, an ID relating to each respective associated subsequent server and preferably each associated data ID, by using one key associated with each respective associated server.

Accordingly, the end time T1 of the first time period, the associated subsequent server ID, namely URL2, and the associated data ID1 are enciphered by using K1, as the key associated with the current involved server SR1. The end time T2 of the second time period, the associated subsequent server ID, namely URL3, and the associated data ID2 are enciphered by using K2, as the key associated with the current involved server SR2. The end time T3 of the third time period, the associated subsequent server ID, namely URL4, and the associated data ID3 are enciphered by using K3, as the key associated with the current involved server SR3. The end time T4 of the fourth time period, the associated subsequent server ID, namely URL1, and the associated data ID4 are enciphered by using K4, as the key associated with the current involved server SR4.

Thus, only a current involved server that receives, before a start of an associated time period, the enciphered sub-data storage plan and that has to send, before a start of a next time period, to the associated subsequent server the enciphered sub-data storage plan is able to decipher only the part of the received sub-data storage plan needed for an involvement of the current involved server.

The SE 12 sends, possibly through the host 14, one or several messages 212 that include a request for storing DATA1 within SR1 182 accompanied with DATA1 that is preferably enciphered and the sub-data storage plan that is preferably enciphered.

The SE 12 may erase or delete the preferably enciphered DATA1.

The SE 12 keeps the data storage plan including at least each associated identifier.

As soon as the SE 12 has sent the message(s) 210, the SE 12 triggers a timer that is based on a reference time provided by the host 14 or a cooperating server.

The SR1 182 deciphers preferably the enciphered end time T1 (of the first time period), the enciphered associated ID1 and the enciphered associated subsequent server ID, namely URL2, by using K1 or a corresponding key, as the key associated with the current involved server SR1.

The SR1 182 stores or lets store the DATA1 that is preferably enciphered and preferably associated with ID1.

Before the end time T1 of the first time period (i.e. at T1 minus a predefined time period delta T that is configurable), i.e. before a start time of the second time period, the SR1 182 sends to SR2 184 one or several messages 214 that include a request for storing DATA1 within SR2 184 accompanied with DATA1 that is preferably enciphered and the sub-data storage plan that is preferably enciphered.

The SR2 184 deciphers preferably the enciphered end time T2 (of the second time period), the enciphered associated ID2 and the enciphered associated subsequent server ID, namely URL3, by using K2 or a corresponding key, as the key associated with the current involved server SR2.

The SR2 184 stores or lets store the DATA1 that is preferably enciphered and preferably associated with ID2.

Before the end time T2 of the second time period (i.e. at T2 minus a predefined time period delta T that is configurable), i.e. before a start time of the third time period, the SR2 184 sends to SR3 186 one or several messages 216 that include a request for storing DATA1 within SR3 186 accompanied with DATA1 that is preferably enciphered and the sub-data storage plan that is preferably enciphered.

The SR3 186 deciphers preferably the enciphered end time T3 (of the third time period), the enciphered associated ID3 and the enciphered associated subsequent server ID, namely URL4, by using K3 or a corresponding key, as the key associated with the current involved server SR3.

The SR3 186 stores or lets store the DATA1 that is preferably enciphered and preferably associated with ID3.

Before the end time T3 of the third time period (i.e. at T3 minus a predefined time period delta T that is configurable), i.e. before a start time of the fourth time period, the

SR3 186 sends to SR4 188 one or several messages 218 that include a request for storing DATA1 within SR4 188 accompanied with DATA1 that is preferably enciphered and the sub-data storage plan that is preferably enciphered.

The SR4 188 deciphers preferably the enciphered end time T4 (of the fourth time period), the enciphered associated ID4 and the enciphered associated subsequent server ID, namely URL1, by using K4 or a corresponding key, as the key associated with the involved server SR4.

The SR4 188 stores or lets store the DATA1 that is preferably enciphered and preferably associated with ID4.

Before the end time T4 of the fourth time period (i.e. at T4 minus a predefined time period delta T that is configurable), i.e. before a start time of the fourth time period, the SR4 188 sends to SR1 182 one or several messages 220 that include a request for storing DATA1 within SR1 182 accompanied with DATA1 that is preferably enciphered and the sub-data storage plan that is preferably enciphered.

The SR1 182 deciphers preferably the enciphered end time T4 (of the first time period), the enciphered associated ID1 and the enciphered subsequent server ID, namely URL2, by using K1 or a corresponding key, as the key associated with the involved server SR1.

The SR1 182 stores or lets store the DATA1 that is preferably enciphered and preferably associated with ID1.

Further to a possible host user request through the host MMI, at a detection of a predefined event, like e.g. a need of access to the concerned data, or at a predefined time, due to a knowledge of the data storage plan, at a given time before the end time of T4 plus T1, the SE 12 sends, through the host 14, to the SR1 182 a message 222 that includes a request for getting DATA1 accompanied preferably with the associated ID1. The ID1 allows the SR1 182 to retrieve the concerned data.

As soon as the SR1 182 has received the message 222, the SR1 182 gets, based on the ID1, the DATA1 that is preferably enciphered.

Then, the SR1 182 sends, through the host 14, to the SE 12 one or several messages 224 that include, as request response, the DATA1 that is preferably enciphered and accompanied preferably with ID1.

The SR1 182 may erase or delete the preferably enciphered DATA1 and the preferably associated ID1 either automatically or after an SE 12 request.

When applicable, as soon as the SE 12 has received the requested enciphered DATA1, the SE 12 deciphers 226 the enciphered DATA1 by using the stored deciphering key (K or a key associated with K). Only the SE 12 is able to decipher the enciphered DATA1 since only the SE memory 124 stores the deciphering key.

Once the DATA1 are in plain text, i.e. non-enciphered data, the SE 12 sends to the host 14 one or several messages 228 that include the DATA1.

Then, the host 14 stores and retrieves the original DATA1.

The invention solution may be used for a data back-up at a server side for data stored initially at a device side.

The invention solution does not need to involve a phone user, except for submitting user authentication data, when applicable.

The invention solution is therefore transparent to the user (no need of any MMI), apart from a possible user authentication operation. Thus, a terminal user benefits from a good user experience.

The invention solution is compatible with the existing network infrastructure.

The invention solution allows splitting between different servers over time a storage of predefined data according to a time schedule defined in a predetermined data storage plan that is stored at a device side. The predefined data may be also split for a given time period, like e.g. application data is divided in executable data, as first data, and in non-executable data, as second data.

Each time that data to be stored at a server side has to be transferred to an associated subsequent server, the current server that is involved for storing this data knows only, from a received sub-data storage plan, which data is to be concerned, at what time the involved server has to transfer the concerned data and which server is to target or addressee of the concerned data along with the sub-data storage plan.

Since only the device (or a cooperating device) that registers the data storage plan knows at a given time in which server(s) concerned data is stored, the invention solution is secure. No server knows the data storage plan and the concerned data. Each server that is involved knows preferably at the best the end time of a time period during which the server is involved for storing the concerned data, an identifier relating to an associated next server for storing the concerned data, when applicable, and preferably an identifier relating to the concerned data.

The invention solution may allow storing anonymously data at a server side, by using an identifier that is independent from the device from which the concerned data originates and that identifies data to be concerned by such a data storage plan at a given server. Each data identifier depends preferably on data relating to the associated time period and/or data relating to the server that is involved for storing the first data during the associated time period. Each time that the concerned data has to be transferred to another server, the identifier thus changes.

Then, a recovery or restoration of data stored at the server side is carried out under an SE, an SE host or a terminal control. The recovery or restoration may be on-line and secure by using preferably the identifier that identifies the concerned data to be imported at a given time, according to the data storage plan.

## Claims

1. A method (20) for storing securely data,
**characterized in that**, a first device (12) accessing a data storage plan, the data storage plan comprising at least first data to be stored firstly in a first server (182) during a first time period and then at least a second server (184, 186 or 188) during a second time period, the first device accessing the at least first data, the method comprises the following steps:
- the first device or a second device (14), the second device incorporating or being coupled to the first device, sends the first data (212) to the first server before a start of the first time period;
- the first server, the first device or the second device sends, under control of the first or the second device, to the second server the first data (214) before a start of the second time period.

2. Method according to claim 1, wherein, prior to sending the first data to the first server, the first device, the second device or a cooperating server generates the data storage plan.

3. Method according to claim 1 or 2, wherein, prior to sending the first data to the first server, the first device, the second device or a cooperating server generates a first identifier relating to the first data, the first identifier allowing to identify the first data, and the first device or the second device sends, before the start of the first time period, to the first server the first data accompanied with the first identifier.

4. Method according to any of claims 1 to 3, wherein, prior to sending the first data to the second server, the first device, the second device or a server generates a second identifier relating to the first data, the second identifier allowing to identify the first data, and the first device or the second device sends the first data accompanied with the second identifier to the second server before the start of the second time period.

5. Method according to any of claims 1 to 4, wherein, prior to sending the first data to the first server, the first device or the second device generates (28), based upon the data storage plan, a sub-data storage plan by extracting, from the data storage plan, only a time schedule that is associated with the first data and at least one associated server that is involved for storing the associated first data during at least one associated time period, the sub-data storage plan including:
- at least one end time of the at least one time period during which each of at least one associated server is involved for storing the first data; and
- an identifier relating to each of at least one associated subsequent server,
the first device or the second device sends to the first server the sub-data storage plan.

6. Method according to any of claims 1 to 5, wherein the data storage plan or a sub-data storage plan includes at least one data identifier allowing to identify at least the first data during each of the at least one associated time period, each of the at least one data identifier depending on data relating to the associated time period and/or data relating to the server that is involved for storing the first data during the associated time period.

7. Method according to claim 5 or 6, wherein, prior to sending the sub-data storage plan to the first server, the first device or the second device enciphers (210):
- at least one end time of the at least one time period during which each of at least one associated server is involved for storing the first data, and
- an identifier relating to each of at least one associated subsequent server, by using a key associated with each of the at least one associated server,
so that only a current involved server that has to send, before a start of a subsequent time period, to the associated subsequent server the sub-data storage plan is able to decipher only the part of the sub-data storage plan needed for an involvement of the current involved server.

8. A first device (12) for storing securely data,
**characterized in that**, the first device comprising means (122, 124 and 126) for accessing a data storage plan, the data storage plan comprising at least first data to be stored firstly in a first server during a first time period and then at least a second server during a second time period, the first device comprising means (122, 124 and 126) for accessing the at least first data, the first device is configured to send the first data to the first server before a start of the first time period.

9. Device according to claim 8, wherein, the first device comprising at least one memory, the first device is configured to:
- encipher, prior to sending the first data, the first data by using an enciphering key; and
- decipher (226) enciphered first data by using a deciphering key stored only in the at least one memory.

10. A system for storing securely data,
**characterized in that**, the system comprising at least a first device (12), a first server (182) and a second server (184), the first device comprising means (122, 124 and 126) for accessing a data storage plan, the data storage plan comprising at least first data to be stored firstly in the first server during a first time period and then at least the second server during a second time period, the first device comprising means (122, 124 and 126) for accessing the at least first data, the first device is configured to send the first data to the first server before a start of the first time period; and
**in that** the first server or the first device is configured to send, under control of the first device, to the second server the first data before a start of the second time period.
